# EUROPEAN PATENT APPLICATION

(11) **EP 4 063 464 A1**
(43) Date of publication of application: **28.09.2022**
(21) Application number: 20888818.0
(22) Date of filing: 18.11.2020
(51) Int. Cl.: C09D 201/02, C09K 3/18, C09D 7/62, C09D 7/63

(54) **COMPOSITION FOR FORMING ANTI-SNOW-ACCRETION FILM, AND ANTI-SNOW-ACCRETION FILM**

(30) Priority: 18.11.2019 JP 2019208155
(71) Applicant: Daikin Industries, Ltd., Osaka-shi, Osaka 530-8323 (JP)
(72) Inventor: YAMAGUCHI, Hiroki, Osaka-shi, Osaka 530-8323 (JP); INOUE, Ryou, Osaka-shi, Osaka 530-8323 (JP); KAGAWA, Michiru, Osaka-shi, Osaka 530-8323 (JP); MORITA, Masamichi, Osaka-shi, Osaka 530-8323 (JP)
(74) Representative: Hoffmann Eitle
(86) International application number: PCT/JP2020/043081
(87) International publication number: WO 2021/100788

(57) **Abstract**

Provided are a composition for forming an anti-snow-accumulation film capable of forming a film that is unlikely to undergo snow accumulation, and an anti-snow-accumulation film. The composition for forming an anti-snow-accumulation film according to the present disclosure contains composite particles formed from fine particles each coated with a first polymer and a coating material component. The anti-snow-accumulation film according to present disclosure contains composite particles formed from fine particles each coated with a first polymer and a binder component. The anti-snow-accumulation film according to the present disclosure has a snow accumulation start time of 20 minutes or more as measured in a snow accumulation test. The anti-snow-accumulation film according to the present disclosure is unlikely to undergo snow accumulation.

## Description

### Technical Field

The present disclosure relates to a composition for forming an anti-snow-accumulation film and to an anti-snow-accumulation film.

### Background Art

Various films have been proposed that can impart super liquid repellency to the surface of an object. (In the present specification, a film capable of imparting super liquid repellency to the surface of an object may be referred to as a "super-liquid-repellent film.")

For example, PTL 1 discloses that the use of fine particles having a polymerizable group and a compound having two or more polymerizable groups per molecule provides a super-liquid-repellent film that satisfies both super liquid repellency and abrasion resistance. PTL 2 discloses a technique of forming a super-liquid-repellent, fluorine-containing film that satisfies both super liquid repellency and abrasion resistance by appropriately controlling the properties of the film. PTL 3 discloses a technique of producing a film-forming composition prepared by mixing a fluorine-containing resin containing a fluorine-based resin and an acrylic resin with a surface roughness adjuster and using the composition in paint for preventing snow accumulation and icing.

### Citation List

### Patent Literature

PTL 1: WO2016/056663A
PTL 2: WO2017/179678A
PTL 3: JPH10-183049A

### Summary of Invention

### Technical Problem

An object of the present disclosure is to provide a composition for forming an anti-snow-accumulation film capable of forming a film that is unlikely to undergo snow accumulation, and to provide an anti-snow-accumulation film.

### Solution to Problem

Specifically, the present disclosure includes, for example, the subject matter described in the following items.
Item 1. A composition for forming an anti-snow-accumulation film, the composition comprising
   a composite particle containing
      a fine particle, and
      a first polymer coating the fine particle, and
   a coating material component.
Item 2. The composition for forming an anti-snow-accumulation film according to Item 1, wherein the coating material component contains a compound having a reactive functional group.
Item 3. The composition for forming an anti-snow-accumulation film according to Item 1,
   wherein the coating material component contains
   a polymer having a reactive functional group, and
   a curing agent.
Item 4. The composition for forming an anti-snow-accumulation film according to any one of Items 1 to 3, wherein the first polymer contains a polymer having a structure unit based on a compound represented by the following formula (1): 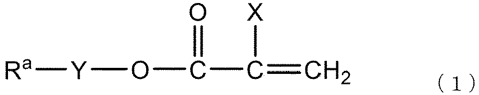 wherein
   X represents a hydrogen atom, a fluorine atom, a chlorine atom, a bromine atom, an iodine atom, a CFX¹X² group wherein X¹ and X² are identical or different and represent a hydrogen atom, a fluorine atom, or a chlorine atom, a cyano group, a C₁₋₆ linear or branched fluoroalkyl group, a substituted or unsubstituted benzyl group, a substituted or unsubstituted phenyl group, or a C₁₋₂₀ linear or branched alkyl group,
   Y represents a direct bond, a C₁₋₁₀ hydrocarbon group optionally having an oxygen atom, a -CH₂CH₂N(R¹)SO₂- group wherein R¹ represents a C₁₋₄ alkyl group, the right end of the - CH₂CH₂N(R¹)SO₂- group is bound to R^{a}, and the left end of the - CH₂CH₂N(R¹)SO₂- group is bound to O, a -CH₂CH(OY¹)CH₂- group wherein Y¹ represents a hydrogen atom or an acetyl group, the right end of the -CH₂CH(OY¹)CH₂- group is bound to R^{a}, and the left end of the - CH₂CH(OY¹)CH₂- group is bound to O, or a -(CH₂)ₙSO₂- group wherein n is 1 to 10, the right end of the -(CH₂)ₙSO₂- group is bound to R^{a}, and the left end of the -(CH₂)ₙSO₂- group is bound to O, and
   R^{a} represents a linear or branched alkyl group having 20 or less carbon atoms, a linear or branched fluoroalkyl group having 6 or less carbon atoms, a polyether group having a molecular weight of 400 to 5000, or a fluoropolyether group having a molecular weight of 400 to 5000.
Item 5. An anti-snow-accumulation film comprising
   a composite particle containing
      a fine particle, and
      a first polymer coating the fine particle, and
   a binder component.
Item 6. The anti-snow-accumulation film according to Item 5, wherein the binder component contains a cured product of a compound having a reactive functional group.
Item 7. The anti-snow-accumulation film according to Item 5 or 6, wherein the first polymer contains a polymer having a structure unit based on a compound represented by the following formula (1): 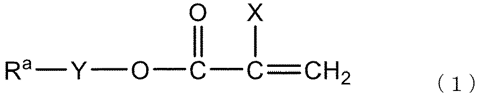 wherein
   X represents a hydrogen atom, a fluorine atom, a chlorine atom, a bromine atom, an iodine atom, a CFX¹X² group wherein X¹ and X² are identical or different and represent a hydrogen atom, a fluorine atom, or a chlorine atom, a cyano group, a C₁₋₆ linear or branched fluoroalkyl group, a substituted or unsubstituted benzyl group, a substituted or unsubstituted phenyl group, or a C₁₋₂₀ linear or branched alkyl group,
   Y represents a direct bond, a C₁₋₁₀ hydrocarbon group optionally having an oxygen atom, a -CH₂CH₂N(R¹)SO₂- group wherein R¹ represents a C₁₋₄ alkyl group, the right end of the - CH₂CH₂N(R¹)SO₂- group is bound to R^{a}, and the left end of the - CH₂CH₂N(R¹)SO₂- group is bound to O, a -CH₂CH(OY¹)CH₂- group wherein Y¹ represents a hydrogen atom or an acetyl group, the right end of the -CH₂CH(OY¹)CH₂- group is bound to R^{a}, and the left end of the -CH₂CH(OY¹)CH₂- group is bound to O, or a -(CH₂)ₙSO₂- group wherein n is 1 to 10, the right end of the -(CH₂)ₙSO₂- group is bound to R^{a}, and the left end of the - (CH₂)ₙSO₂- group is bound to O, and
   R^{a} represents a linear or branched alkyl group having 20 or less carbon atoms, a linear or branched fluoroalkyl group having 6 or less carbon atoms, a polyether group having a molecular weight of 400 to 5000, or a fluoropolyether group having a molecular weight of 400 to 5000.
Item 8. The anti-snow-accumulation film according to any one of Items 5 to 7, wherein the anti-snow-accumulation film has a water contact angle of 150° or higher.
Item 9. An anti-snow-accumulation film,
   wherein the anti-snow-accumulation film has a snow accumulation start time of 5 minutes or more as measured in a snow accumulation test; and
   wherein the snow accumulation test is performed in the following manner:
      an anti-snow-accumulation film is placed on a test table in a test room kept at a constant temperature within the range of 1 to 2°C such that the surface of the film on which snow hits is perpendicular to the ground;
      artificial snow prepared beforehand is sprayed over the film at a wind speed of 10 m/sec and a collision amount of 110 kg/m²/h such that the artificial snow collides with the surface of the film;
      the entire sprayed surface of a sample is monitored from the start of the spraying, and whether snow accumulation has occurred is visually confirmed every predetermined time; and
      the time from the start of the spraying to snow accumulation is measured as a snow accumulation start time (time with no snow accumulation).
Item 10. A substrate comprising the anti-snow-accumulation film of any one of Items 5 to 9.
Item 11. The substrate according to Item 10, which is for use in an antenna cover.

### Advantageous Effects of Invention

The composition for forming an anti-snow-accumulation film according to the present disclosure forms a film that is unlikely to undergo snow accumulation.

The anti-snow-accumulation film according to the present disclosure is unlikely to undergo snow accumulation.

### Description of Embodiments

Because one of the potential applications of super-liquid-repellent films is prevention of snow accumulation, super-liquid-repellent films are required to have excellent anti-snow-accumulation performance. However, traditional super-liquid-repellent films are unsatisfactory in snow accumulation performance. For example, although adhesion of snow on such a film is suppressed in the initial contact between the film and snow, snow gradually accumulates on the film when the film is exposed to snow for a certain period of time. The amount of adhered snow increases with time. Thus, traditional super-liquid-repellent films have been difficult to use in the prevention of snow accumulation because of their insufficient anti-snow-accumulation performance. In particular, since materials with excellent water repellency and oil repellency are not necessarily excellent in anti-snow-accumulation performance, it is difficult to obtain a film with excellent anti-snow-accumulation performance by simply increasing the performance of water repellency and oil repellency.

Given the circumstances, the present inventors conducted extensive research with the aim of providing an anti-snow-accumulation film that is unlikely to undergo snow accumulation. As a result, the inventors found that a composition obtained by combining composite particles having a specific structure with a specific coating material component, or by combining composite particles having a specific structure with a specific binder component, can provide an anti-snow-accumulation film that is unlikely to undergo snow accumulation.

The following describes embodiments of the present disclosure in detail. In the present specification, the terms "comprising," "containing," and "including" include the concepts of comprising, containing, including, consisting essentially of, and consisting of.

In the present specification, the numerical range "X to Y" indicates a range including the numerical values X and Y as the minimum and maximum values. In the graduated numerical ranges described in the present specification, the upper or lower limit of the numerical range of one instance can be freely combined with the upper or lower limit of the numerical range of another instance. In the numerical ranges described in the present specification, the upper or lower limits of the numerical ranges may be replaced by the values shown in the Examples or by values that can be uniquely derived from the Examples.

### 1. Composition for Forming Anti-snow-accumulation Film

The composition for forming an anti-snow-accumulation film according to the present disclosure contains composite particles containing fine particles and a first polymer coating each fine particle and a coating material component. The composition for forming an anti-snow-accumulation film according to the present disclosure is simply referred to as "the composition of the present disclosure" below.

Because of its excellent anti-snow-accumulation performance, the film formed from the composition of the present disclosure is unlikely to undergo snow accumulation over a long period of time even when exposed to snow.

### Composite Particles

The composite particles in the composition of the present disclosure each contain a fine particle and a first polymer coating the fine particle. The first polymer coating a fine particle and the fine particle may be bonded to each other through a chemical bond, or may be in physical contact with each other without a chemical bond. When the first polymer coating a fine particle and the fine particle are chemically bonded, the chemical bond is, for example, a covalent bond, a coordinate bond, an ion bond, a hydrogen bond, or a van der Waals force, and is preferably a covalent bond. The percentage of coating by the first polymer in the composite particle containing the fine particle and the first polymer coating the fine particle is not limited.

The fine particles can be of any type. Examples include fine silica particles, other fine metal oxide particles, carbon black, fullerenes, and carbon nanotubes. From the standpoint of the likeliness of the film formed from the composition of the present disclosure becoming harder and having better anti-snow-accumulation performance, the fine particles are preferably silica.

The composite particles can have any average particle size. From the standpoint of the likeliness of the film formed from the composition of the present disclosure having increased level of hardness and having better anti-snow-accumulation performance, the composite particles have an average particle size of, for example, 1 nm or more and 5 µm or less, more preferably 5 nm or more and 4 µm or less, still more preferably 5 nm or more and 3.5 µm or less, and particularly preferably 5 nm or more and less than 3 µm.

The average particle size of the fine particles in the composition of the present disclosure is measured in accordance with the following procedure. The volatile component of the composition of the present disclosure is removed by heating treatment (300°C, 3 hours), and the obtained fine particles are directly observed with a scanning electron microscope. Two hundred composite particles in a captured image are selected, and the calculated average of the equivalent circle diameter of these particles is determined to be the average particle size of the fine particles in the composition. In the composition of the present disclosure, the average particle size of the fine particles can also be considered to be the average particle size of the composite particles.

The fine particles can have any specific surface area. For example, from the standpoint of the ease of increasing the hardness of the obtained film, the specific surface area is preferably 30 to 700 m²/g, and more preferably 100 to 300 m²/g.

The specific surface area of the fine particles in the composition of the present disclosure refers to a value as measured according to BET theory ("BET specific surface area").

The fine particles may be of any shape. For example, the fine particles may have a spherical shape or an elliptical shape, or may be indefinitely shaped particles having an irregular shape.

The first polymer coating the fine particles can be of any type and can be selected, for example, from a wide range of known polymer compounds. For example, the first polymer may have a fluorine atom or have no fluorine atom.

The first polymer may contain, for example, a polymer having a structure unit based on a compound represented by the following formula (1). Just to note, the "structure unit based on a compound" in the present specification refers to a repeating structure unit formed as a result of polymerization of the compound rather than the compound itself.

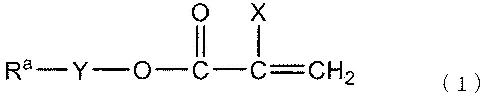

In formula (1), X represents a hydrogen atom, a fluorine atom, a chlorine atom, a bromine atom, an iodine atom, a CFX¹X² group (wherein X¹ and X² are identical or different and represent a hydrogen atom, a fluorine atom, or a chlorine atom), a cyano group, a C₁₋₆ linear or branched fluoroalkyl group, a substituted or unsubstituted benzyl group, a substituted or unsubstituted phenyl group, or a C₁₋₂₀ linear or branched alkyl group. When X is an alkyl group, the alkyl group may be either cyclic or non-cyclic, and may preferably have 1 to 10 carbon atoms, more preferably 1 to 6 carbon atoms, and still more preferably 1 to 2 carbon atoms. When X is a fluoroalkyl group, the fluoroalkyl group may be either cyclic or non-cyclic. The number of carbon atoms of the alkyl group or the fluoroalkyl group is preferably 1 to 6, more preferably 1 to 4, and still more preferably 1 to 2.

In formula (1), Y represents a direct bond, a C₁₋₁₀ hydrocarbon group optionally having an oxygen atom, a -CH₂CH₂N(R¹)SO₂- group (wherein R¹ represents a C₁₋₄ alkyl group, the right end of the -CH₂CH₂N(R¹)SO₂- group is bound to R^{a}, and the left end of the -CH₂CH₂N(R¹)SO₂- group is bound to O), a - CH₂CH(OY¹)CH₂- group (wherein Y¹ represents a hydrogen atom or an acetyl group, the right end of the -CH₂CH(OY¹)CH₂- group is bound to R^{a}, and the left end of the -CH₂CH(OY¹)CH₂- group is bound to O), or a -(CH₂)ₙSO₂- group (wherein n is 1 to 10, the right end of the -(CH₂)ₙSO₂- group is bound to R^{a}, and the left end of the - (CH₂)ₙSO₂- group is bound to O). The phrase "direct bond" means that R^{a} and O adjacent to Y in formula (1) are directly bonded to each other; i.e., Y contains no element. When Y is a C₁₋₁₀ hydrocarbon group, Y is specifically a C₁₋₁₀ alkylene group, preferably a C₁₋₆ alkylene group, and still more preferably a C₁₋₂ alkylene group.

In formula (1), R^{a} represents a linear or branched alkyl group having 20 or less carbon atoms, a linear or branched fluoroalkyl group having 6 or less carbon atoms, a polyether group having a molecular weight of 400 to 5000, or a fluoropolyether group having a molecular weight of 400 to 5000. The fluoroalkyl group is, for example, preferably a perfluoroalkyl group, and the fluoropolyether group is, for example, preferably a perfluoropolyether group.

Specific examples of the compound represented by formula (1) include acrylic acid esters disclosed in PTL 1.

In particular, from the standpoint of excellent water repellency and oil repellency of the obtained film and the ease of increasing anti-snow-accumulation performance of the film, the compound represented by formula (1) is a compound wherein X represents a hydrogen atom, a methyl group, or a fluorine atom, Y represents a direct bond or a C₁₋₁₀ alkylene group (preferably a C₁₋₆ alkylene group, more preferably a C₁₋₂ alkylene group), and R^{a} represents a C₂₋₂₀ linear or branched alkyl group, a C₂₋₆ linear or branched fluoroalkyl group, a polyether group having a molecular weight of 400 to 5000, or a fluoropolyether group having a molecular weight of 400 to 5000. More preferably, the compound represented by formula (1) is a compound wherein X represents a hydrogen atom or a methyl group, Y represents a C₁₋₂ alkylene group, and R^{a} represents a C₂₋₆ linear or branched fluoroalkyl group; or a compound wherein X represents a hydrogen atom or a methyl group, Y represents a direct bond, and R^{a} represents a C₁₋₂₀ linear or branched alkyl group.

Specific examples of the compound represented by formula (1) include fluoroalkyl (meth)acrylate in which the fluoroalkyl group has 1 to 6 carbon atoms, and alkyl (meth)acrylate in which the alkyl group has 1 to 20 (preferably 1 to 18) carbon atoms.

If the first polymer contains a polymer having a structure unit based on the compound represented by formula (1), the structure unit based on the compound represented by formula (1) contained in the polymer may be either of a single type or of two or more types.

The first polymer can have any molecular weight. For example, the molecular weight can be within the range of the mass-average molecular weight as formed in known radical polymerization. The first polymer may be a homopolymer formed of only a single type of structure units or a copolymer formed of two or more types of structure units. If the first polymer is a copolymer, the copolymer may be of any form, such as a random copolymer or a block copolymer.

The first polymer may be formed only of a polymer having a structure unit based on the compound represented by formula (1), and may also additionally have a structure unit other than the structure unit based on the compound represented by formula (1). The total content of the structure unit based on the compound represented by formula (1) in the first polymer is, for example, 50 mass% or more, preferably 80 mass% or more, more preferably 90 mass% or more, and particularly preferably 99 mass% or more.

The method for producing the composite particles is not limited, and can be selected, for example, from a wide range of known methods. For example, the composite particles can be produced by a method in which coating with the first polymer is performed by using fine particles having on their surface a polymerizable group or a functional group involved in polymerization and a compound represented by formula (1) (simply "coating method 1" below), or a method in which the first polymer is applied to the fine particles by using the first polymer and the fine particles (simply "coating method 2" below).

The fine particles of "fine particles having on their surface a polymerizable group or a functional group involved in polymerization" include fine silica particles, other fine metal oxide particles, carbon black, fullerenes, and carbon nanotubes as described above. From the standpoint of the likeliness of the film becoming hard and the ease of modifying the surface with a compound containing a polymerizable group or a compound containing a polymerization initiation group, the fine particles are preferably silica.

The polymerizable group on the surface of the fine particles is not limited. Examples include radical polymerizable groups, cationic polymerizable groups, and anionic polymerizable groups. From the standpoint of versatility or reactivity, radical polymerizable groups are preferable, and examples include a vinyl group, a (meth)acrylic group, a styryl group, and a maleimide group. The method for producing fine particles having a polymerizable group on their surface is not limited, and can be selected, for example, from a wide range of known production methods. Fine particles having a polymerizable group on their surface can also be obtained from commercially available products. The functional group involved in polymerization on the surface of fine particles includes groups derived from an initiator of radical polymerization or groups derived from a chain transfer agent. Examples of groups derived from an initiator of radical polymerization include an azo group and a peroxy group. Specific examples of groups derived from a chain transfer agent include a thiol group.

In coating method 1, composite particles can be produced by polymerization reaction between fine particles having on their surface a polymerizable group or a functional group involved in polymerization and a compound represented by formula (1). This allows the polymerizable group or functional group involved in polymerization on the surface of fine particles to undergo polymerization reaction with the compound represented by formula (1), thereby forming a chemical bond (covalent bond) between the surface of the fine particles and the compound represented by formula (1). The polymerization reaction is, for example, radical polymerization. The conditions of the polymerization reaction are not limited, and can be selected from a wide range of known methods. The polymerization reaction can be performed in a polymerization solvent. The polymerization reaction can also be performed by using a polymerization initiator. The polymerization solvent and polymerization initiator can be of any type and can be selected, for example, from a wide range of known solvents and polymerization initiators for use in polymerization reaction. Examples of polymerization solvents include fluorine-based solvents, such as hydrofluoroether, alcohol compounds, water, and mixtures thereof. In coating method 2, for example, a first polymer synthesized beforehand and fine particles are mixed in a solvent to form a coating of the first polymer on the surface of the fine particles, thereby producing composite particles.

### Coating Material Component

The coating material component in the composition of the present disclosure serves as a binder component, described later, when a film is formed, and can be referred to as a "binder component precursor." Specifically, the coating material component can be cured and forms a binder component of the film after curing.

The coating material component can be of any type as long as the coating material component can form a binder component, and can be selected from a wide range of known materials. For example, the coating material component may be a low-molecular compound or a component capable of forming a polymer by polymerization or curing. From the standpoint of excellent film formability, the coating material component is preferably a component capable of forming a polymer by polymerization. For example, the composition of the present disclosure may contain a compound having a reactive functional group as a coating material component. Examples of compounds having a reactive functional group include polymers having a reactive functional group described later, and photopolymerizable monomers.

Specific examples of the coating material component include a component that undergoes curing reaction due to heat to thereby provide a cured product, and a component that provides a cured product due to light irradiation, such as UV. The component that undergoes curing reaction due to heat to give a cured product is referred to as a "thermosetting resin component," and the component that gives a cured product due to light irradiation is referred to as a "photo-curable resin component."

The thermosetting resin component can be of any type and can be, for example, a mixture of a compound having a reactive functional group and an optionally added curing agent. In particular, the compound having a reactive functional group is preferably a compound that undergoes a curing reaction due to the reaction between the curing agent and heat, and more preferably a polymer having a reactive functional group.

Specifically, when the coating material component is a thermosetting resin component, the coating material component preferably contains a polymer having a reactive functional group and a curing agent. In this case, the film formed from the composition of the present disclosure is likely to have increased anti-snow-accumulation performance. A thermosetting resin component containing a polymer having a reactive functional group makes it easier for crosslinking reaction to proceed by thermosetting.

Examples of reactive functional groups in the polymer having a reactive functional group include a hydroxyl group, a carboxyl group, an amino group, a thiol group, and an isocyanate group.

The polymer having a reactive functional group is simply referred to as a "reactive polymer" below.

The reactive polymer preferably further has a fluoroalkyl group. This increases the water repellency of the film and also further increases the anti-snow-accumulation performance.

The reactive polymer for use is preferably a fluorine-containing polymer having a reactive functional group. The fluorine-containing polymer is, for example, a polymer containing
(a) a tetrafluoroethylene structure unit,
(b) a non-aromatic vinyl ester monomer structure unit having no hydroxyl group and no carboxyl group,
(c) a hydroxyl group-containing vinyl monomer structure unit having no aromatic group and no carboxyl group,
(e) a carboxyl group-containing monomer structure unit having no hydroxyl group and no aromatic group, and
(f) another monomer structure unit (however, not containing (d) an aromatic group-containing monomer structure unit having no hydroxyl group and no carboxyl group). This polymer is referred to as "polymer F" below. A thermosetting resin that is polymer F particularly increases the water resistance of the film.

The lower limit of the content of the tetrafluoroethylene structure unit (a) in the entire amount of polymer F is 20 mol%, preferably 30 mol%, more preferably 40 mol%, and particularly preferably 42 mol%; and the upper limit of the content of the tetrafluoroethylene structure unit (a) in the entire amount of polymer F is 49 mol%, and preferably 47 mol%.

Monomers that give the non-aromatic vinyl ester monomer structure unit (b) are, for example, one or more members of the following: vinyl acetate, vinyl propionate, vinyl butyrate, vinyl isobutyrate, vinyl pivalate, vinyl caproate, vinyl versatate, vinyl laurate, vinyl stearate, and vinyl cyclohexylcarboxylate. These monomers are non-aromatic monomers having no hydroxyl group and no carboxyl group. From the standpoint of excellent weatherability, a particularly preferable non-aromatic vinyl ester monomer structure unit is one member selected from the group consisting of vinyl versatate, vinyl laurate, vinyl stearate, vinyl cyclohexylcarboxylate, and vinyl acetate. Of these, from the standpoint of chemical resistance, a non-aromatic carboxylic acid vinyl ester, particularly a carboxylic acid vinyl ester in which the carboxylic acid has 6 or more carbon atoms is preferable, and a carboxylic acid vinyl ester in which the carboxylic acid has 9 or more carbon atoms is more preferable. The upper limit of the number of carbon atoms of the carboxylic acid of the carboxylic acid vinyl ester is 20 or less, and preferably 15 or less. A most preferable specific example is vinyl versatate.

The lower limit of the content of the non-aromatic vinyl ester monomer structure unit (b) in the entire amount of polymer F is 25 mol%, and preferably 30 mol%; and the upper limit of the content of the non-aromatic vinyl ester monomer structure unit (b) in the entire amount of polymer F is 69.9 mol%, preferably 60 mol%, more preferably 43 mol%, and particularly preferably 40 mol%.

The monomer that gives the hydroxyl group-containing vinyl monomer structure unit (c) is a non-aromatic monomer containing no carboxyl group, such as hydroxy alkyl vinyl ether or hydroxy alkyl allyl ether represented by formula (2): CH₂=CHR¹⁰ (2) .

In formula (2), R¹⁰ represents -OR²⁰ or -CH₂OR²⁰ (wherein R²⁰ represents a hydroxyl-containing alkyl group). R²⁰ is, for example, a C₁₋₈ linear or branched alkyl group having one to three (preferably one) hydroxyl groups attached. An example is one, two, or more members of the following: 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether, 6-hydroxyhexyl vinyl ether, 2-hydroxyethyl allyl ether, 4-hydroxybutyl allyl ether, and glycerol monoallyl ether. Of these, the monomer that gives the hydroxyl group-containing vinyl monomer structure unit (c) is preferably 4-hydroxybutyl vinyl ether and 2-hydroxyethyl vinyl ether.

The presence of this hydroxyl group-containing vinyl monomer structure unit (c) allows the film to have improved processability, impact resistance, and contamination resistance.

The lower limit of the content of the hydroxyl group-containing vinyl monomer structure unit (c) in the entire amount of polymer F is 8 mol%, preferably 10 mol%, and still more preferably 15 mol%; and the upper limit of the content of the hydroxyl group-containing vinyl monomer structure unit (c) in the entire amount of polymer F is 30 mol%, and preferably 20 mol%.

Although polymer F can be basically formed of components (a), (b), and (c) (however, in each unit, two or more members may be copolymerized), polymer F may also contain another copolymerizable monomer structure unit (f) in an amount of up to 10 mol%. The copolymerizable monomer structure unit (f) is a monomer structure unit other than components (a), (b), and (c), the aromatic group-containing monomer structure unit (d), and the carboxyl group-containing monomer structure unit (e).

The monomer that gives the copolymerizable monomer structure unit (f) is, for example, an alkyl vinyl ether, such as methyl vinyl ether and ethyl vinyl ether; and a non-fluorine-based olefin, such as ethylene, propylene, n-butene, and isobutene. The content of the copolymerizable monomer structure unit (f) is 10 mol% or less, preferably less than 5 mol%, and still more preferably 4 mol% or less in polymer F.

Polymer F may further contain the aromatic group-containing monomer structure unit having no hydroxyl group and no carboxyl group (d). The aromatic group-containing monomer structure unit having no hydroxyl group and no carboxyl group (d) is, for example, one, two, or more members of the following: vinyl benzoate monomers, such as vinyl benzoate and vinyl para-t-butyl benzoate; particularly preferably vinyl para-t-butyl benzoate, and still more preferably vinyl benzoate.

The lower limit of the content of the aromatic group-containing monomer structure unit (d) in polymer F is 2 mol%, and preferably 4 mol%; and the upper limit of the content of the aromatic group-containing monomer structure unit (d) in polymer F is 15 mol%, preferably 10 mol%, and more preferably 8 mol%.

Polymer F may further contain the carboxyl group-containing monomer structure unit having no hydroxyl group and no aromatic group (e). The carboxyl group-containing monomer is, for example, one member, two, or more members of the following: acrylic acid, methacrylic acid, vinyl acetate, crotonic acid, cinnamic acid, 3-allyloxy propionic acid, itaconic acid, itaconic acid monoester, maleic acid, maleic acid monoester, maleic acid anhydride, fumaric acid, fumaric acid monoester, vinyl phthalate, and vinyl pyromellitate. Of these, the following monomers with a low degree of homopolymerization is preferable: crotonic acid, itaconic acid, maleic acid, maleic acid monoester, fumaric acid, fumaric acid monoester, and 3-allyloxy propionic acid.

The lower limit of the content of the carboxyl group-containing monomer structure unit (e) in polymer F is 0.1 mol%, and preferably 0.4 mol%; and the upper limit of the content of the carboxyl group-containing monomer structure unit (e) in polymer F is 2.0 mol%, and preferably 1.5 mol%.

Polymer F has a number average molecular weight of, for example, 1000 to 1000000, and preferably 3000 to 50000, as measured by gel permeation chromatography (GPC) using tetrahydrofuran as an eluent. Polymer F has a glass transition temperature (second run) of, for example, 10 to 60°C, and preferably 20 to 40°C, as determined by differential scanning calorimetry (DSC). The method for producing polymer F can be any method and can be selected from a wide range of known production methods. Polymer F can also be obtained from commercially available products.

Specific examples of polymer F include Zeffle (registered trademark) GK series produced by Daikin Industries, Ltd.

The thermosetting resin component may contain a curing agent as described above. The curing agent can be any curing agent and can be selected, for example, from a wide range of compounds for use in curing agents for thermosetting resin. In particular, the curing agent is preferably the compound having two or more polymerizable groups per molecule described above.

Specific examples of curing agents include isocyanate-based curing agents. Examples of isocyanate-based curing agents include isocyanate group-containing compounds (simply "isocyanate compound" below). Examples of isocyanate compounds include a compound represented by the following formula (20).

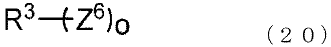

In formula (20), Z⁶ is a linear or branched monovalent hydrocarbon group or carbonyl group that has an isocyanate group at least at its one terminal, that may have at least one carbon atom replaced with a heteroatom, that may have at least one hydrogen atom replaced with a halogen atom, and that may have a carbon-carbon unsaturated bond. In formula (20), R³ is a branched or cyclic divalent or higher-valent hydrocarbon group or carbonyl group that may have at least one carbon atom replaced with a heteroatom, that may have at least one hydrogen atom replaced with a halogen atom, that may have at least one carbon atom replaced with a heteroatom, and that may have a carbon-carbon unsaturated bond. In formula (20), o is an integer of 2 or higher.

R³ preferably has 1 to 20 carbon atoms, more preferably 2 to 15 carbon atoms, and still more preferably 3 to 10 carbon atoms.

Z⁶ preferably has 1 to 20 carbon atoms, more preferably 2 to 15 carbon atoms, and still more preferably 3 to 10 carbon atoms.

The isocyanate compound for use may be one member, or a combination of two or more members.

The isocyanate compound is, for example, a polyisocyanate. In the present specification, "polyisocyanate" refers to a compound having two or more isocyanate groups per molecule. The isocyanate compound may be a polyisocyanate obtained by performing trimerization of a diisocyanate. Such a polyisocyanate obtained by performing trimerization of a diisocyanate can be a triisocyanate. A polyisocyanate that is a trimer of a diisocyanate may be present in the form of a polymer as a result of polymerization of the polyisocyanate.

The diisocyanate can be any diisocyanate; and the diisocyanate includes a diisocyanate having its isocyanate group bound to an aliphatic group, such as trimethylene diisocyanate, hexamethylene diisocyanate, isophorone diisocyanate, xylylene diisocyanate, hydrogenated xylylene diisocyanate, cyclohexane diisocyanate, dicyclohexyl methane diisocyanate, and norbornane diisocyanate; and a diisocyanate having its isocyanate group bound to an aromatic group, such as tolylene diisocyanate, diphenylmethane diisocyanate, polymethylene polyphenyl polyisocyanate, tolidine diisocyanate, and naphthalene diisocyanate.

Specific polyisocyanates include, but are not limited to, compounds having the following structures.

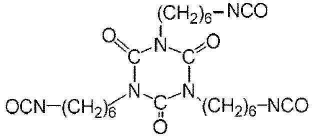

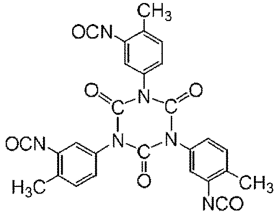

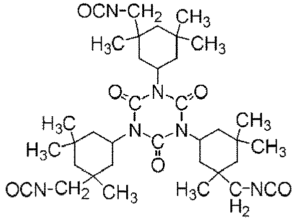

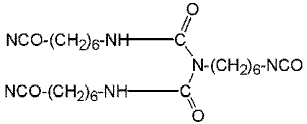

These polyisocyanates may be present in the form of a polymer. For example, isocyanurate polyisocyanate of hexamethylene diisocyanate may contain a polymer with the following structure.

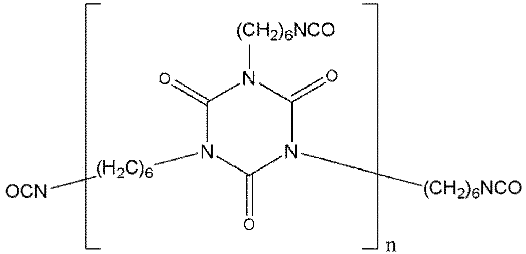

In a preferable embodiment, the isocyanate compound is an isocyanurate polyisocyanate.

The isocyanurate polyisocyanate may be in the form of a polymer as a result of polymerization of these. The isocyanurate polyisocyanate may be a monocyclic compound having only one isocyanurate ring or a polycyclic compound obtained by polymerizing this monocyclic compound.

In an embodiment in which two or more isocyanate compounds are used, a mixture containing a monocyclic compound having only one isocyanurate ring can be used.

In another embodiment in which two or more isocyanate compounds are used, a mixture containing an isocyanate compound that is an isocyanurate polyisocyanate can be used. The isocyanurate polyisocyanate may be, for example, a triisocyanate, and specifically a triisocyanate obtained by performing trimerization of a diisocyanate.

Specific examples of isocyanate compounds include 2,4-tolylene diisocyanate, diphenylmethane-4,4'-diisocyanate, xylylene diisocyanate, isophorone diisocyanate, lysine methyl ester diisocyanate, methyl cyclohexyl diisocyanate, trimethyl hexamethylene diisocyanate, hexamethylene diisocyanate, n-pentane -1,4-diisocyanate, trimers thereof, adducts thereof, biurets thereof, isocyanurates thereof, polymers thereof that have two or more isocyanate groups, and blocked isocyanates. Specific examples of more detailed curing agents for use include the following commercially available products: Sumidur (registered trademark) N3300 (produced by Sumika Covestro Urethane Co., Ltd.), Desmodur (registered trademark) N3600 (produced by Sumika Covestro Urethane Co., Ltd.), Desmodur T, L, IL, and HL series (produced by Sumika Covestro Urethane Co., Ltd.), Desmodur (registered trademark) 2460M (produced by Sumika Covestro Urethane Co., Ltd.), Sumidur (registered trademark) 44 series (produced by Sumika Covestro Urethane Co., Ltd.), SBU isocyanate series (produced by Sumika Covestro Urethane Co., Ltd.), Desmodur (registered trademark) E and M series (produced by Sumika Covestro Urethane Co., Ltd.), Sumidur HT (produced by Sumika Covestro Urethane Co., Ltd.), Desmodur N series (produced by Sumika Covestro Urethane Co., Ltd.), Desmodur Z4470 series (produced by Sumika Covestro Urethane Co., Ltd.), Duranate TPA-100 (produced by Asahi Kasei Corporation), Duranate TKA-100 (produced by Asahi Kasei Corporation), Duranate 24A-100 (produced by Asahi Kasei Corporation), Duranate 22A-75P (produced by Asahi Kasei Corporation), and Duranate P301-75E (produced by Asahi Kasei Corporation).

If the thermosetting resin component contains a curing agent, the content of the curing agent can be 10 to 100 mass%, and preferably 15 to 35 mass%, based on the total mass of the thermosetting resin component.

If the coating material component is a photo-curable resin component, examples of such a photo-curable resin component include compounds having a reactive functional group; in particular, the compounds having a reactive functional group include monomers that undergo a polymerization reaction caused by light irradiation, such as UV. The monomers can be of any type and can be selected, for example, from a wide range of known photopolymerizable monomers. If the polymerizable component is a photo-curable resin component, it is also preferable to use, for example, a known photopolymerization initiator.

### Composition

The content of the composite particles and the coating material component in the composition of the present disclosure is not limited as long as the effects of the present disclosure are not impaired. For example, the content of the composite particles in the composition of the present disclosure is preferably 25 to 75 parts by mass per 100 parts by mass of the total mass of the composite particles and the coating material component (on a solids basis). A content of the composite particles in this range makes it unlikely for film harness to decrease, and makes it likely for desired anti-snow-accumulation performance to be achieved. The content of the composite particles is more preferably 40 to 60 parts by mass per 100 parts by mass of the total mass of the composite particles and the coating material component.

The content of the coating material component in the composition of the present disclosure is preferably 25 to 75 parts by mass per 100 parts by mass of the total mass of the composite particles and the coating material component. A content of the coating material component in this range makes it likely for desired anti-snow-accumulation performance to be achieved. The content of the coating material component (on a solids basis) is more preferably 40 to 60 parts by mass per 100 parts by mass of the total mass of the composite particles and the coating material component.

In the composition of the present disclosure, either the first polymer contained in the composite particles or the coating material component, or both, preferably contain a fluoroalkyl group; more preferably, the coating material component contains a fluorine atom. This enables a film formed from the film-forming composition to have excellent water repellency and a high level of hardness, and makes it more likely for the film to have increased anti-snow-accumulation performance. Of course, the first polymer and the coating material component both may contain a fluorine atom (a fluoroalkyl group). An example of the coating material component having a fluoroalkyl group is the case in which the reactive polymer contained in the thermosetting resin component is polymer F. A more specific example is polymer F having a fluoroalkylene group. An example of the first polymer having a fluoroalkyl group is a polymer containing the compound represented by formula (1) in which the fluoroalkyl group is C₁₋₆ fluoroalkyl (meth)acrylate.

The composition of the present disclosure may contain other components as long as the composition contains the composite particles and the coating material component. For example, the composition of the present disclosure may optionally contain a solvent. The solvent for use can be of any type and can be selected from, for example, a wide range of solvents for use in forming films, such as fluorine-based solvents (e.g., hydrofluoroether), ester compounds, and alcohol compounds. The content of the solvent in the composition is not limited, and can be, for example, 200 to 2000 parts by mass per 100 parts by mass of the total mass of the composite particles and the coating material component.

The composition of the present disclosure may also contain additives other than solvents. The content of the additives in the composition of the present disclosure is preferably 5 mass% or less based on the total mass of the composite particles and the coating material component.

The method for preparing the composition of the present disclosure is not limited. For example, the composition can be prepared by mixing composite particles and a coating material component (e.g., a thermosetting resin component containing polymer F and a curing agent) in predetermined amounts. The mixing method is also not limited. For example, a wide range of known mixers are usable.

The method for forming a film from the composition of the present disclosure is not limited. For example, a film can be formed by coating a substrate for forming a film with the composition to form a coating, and curing the coating.

The method for applying the composition of the present disclosure is not limited and can be selected from a wide range of known methods for forming a coating. For example, the composition can be applied by a method such as brush coating, spraying, spin coating, or dispensing. The substrate for forming a coating of the composition of the present disclosure can be of any type. Examples of substrates include known resin substrates, such as acrylic resin and polycarbonate resin, and other various substrates such as metal (e.g., aluminum), inorganic substrates, and glass substrates. The substrate may be a composite substrate formed from two or more materials of these substrates.

The method for curing the composition of the present disclosure is also not limited. For example, various methods such as thermosetting and photo-curing can be used, and thermosetting and photo-curing can be combined. If thermosetting is used, it is preferable to heat the coating of the film-forming composition to 60 to 150°C. In this case, a film is easily formed from the composition, and the film has a high level of hardness and excellent anti-snow-accumulation performance. The heating time is not limited and can be suitably determined according to the heating temperature.

Because of the presence of the composite particles and a cured product of the coating material component (binder component), the film formed from the composition of the present disclosure is excellent in anti-snow-accumulation performance and is unlikely to undergo snow accumulation for a long period of time even when exposed to snow. For example, the film formed from the composition of the present disclosure can exhibit anti-snow-accumulation performance for a long period of time even in areas with heavy snowfall. Thus, the composition of the present disclosure is suitable for use in forming a film for preventing snow accumulation.

A chemical solution can be prepared from the composition of the present disclosure. The chemical solution is suitable for forming a film because the chemical solution contains the composition. The chemical solution may be formed only of the composition of the present disclosure, or the chemical solution may contain other additives (e.g., known additives for use in film-forming chemicals), as long as the intended properties of the composition of the present disclosure are not impaired.

### 2. Anti-snow-accumulation Film

In an embodiment, the anti-snow-accumulation film of the present disclosure contains composite particles containing fine particles and a first polymer coating the fine particles and a binder component. The anti-snow-accumulation film is referred to as "film A" below. Film A of the present disclosure can be formed from the composition of the present disclosure; i.e., film A is a cured product of the composition of the present disclosure.

The composite particles in film A of present disclosure are the same as the composite particles contained in the film-forming composition of the present disclosure. Regarding the average particle size of the composite particles, from the standpoint of the ease of increasing the hardness of the film and better anti-snow-accumulation performance, the average particle size of the fine particles is, for example, 1 nm or more and 5 µm or less, more preferably 5 nm or more and 4 µm or less, still more preferably 5 nm or more and 3.5 µm or less, and particularly preferably 5 nm or more and less than 3 µm.

In the present disclosure, the average particle size of the composite fine particles in the film is measured in accordance with the following procedure. First, the film is subjected to heating treatment to burn off the organic component in the film; this allows for the separation of fine particles in the film. The heating treatment is performed at 300°C for 3 hours in an air atmosphere. The obtained fine particles are directly observed with a scanning electron microscope. Two hundred fine particles in a captured image are selected, and their equivalent circle diameter is calculated. The average is determined to be the average particle size of the composite fine particles in the film.

The binder component in the film of the present disclosure is a component as a result of curing of the coating material component contained in the composition of the present disclosure. For example, if the coating material component contains a compound having a reactive functional group, the binder component contains a cured product of the compound. More specifically, if the coating material component is the thermosetting resin component described above, the binder component contains a cured product of the polymer having a reactive functional group (e.g., polymer F) cured by the curing agent described above. If the coating material component is the photo-curable resin component described above, the binder component contains a polymer of a photopolymerizable monomer.

The binder component may contain an uncured coating material component as long as the properties of the film of the present disclosure are not impaired.

The content of the composite particles in film A of the present disclosure is preferably 25 to 75 parts by mass per 100 parts by mass of the total mass of the composite particles and the binder component. A content of the composite particles in film A in this range makes it unlikely for the hardness of film A to decrease and makes it easy to achieve desired anti-snow-accumulation performance. The content of the composite particles is more preferably 40 to 60 parts by mass per 100 parts by mass of the total mass of the composite particles and the binder component.

The content of the binder component in film A of the present disclosure is preferably 25 to 75 parts by mass per 100 parts by mass of the total mass of the composite particles and the binder component. A content of the binder component in film A in this range makes it easy for desired anti-snow-accumulation performance to be achieved. The content of the binder component is more preferably 40 to 60 parts by mass per 100 parts by mass of the total mass of the composite particles and the binder component.

In film A of the present disclosure, either the first polymer in the composite particles or the binder component, or both, preferably have a fluorine atom (i.e., a fluoroalkyl group); more preferably, the binder component has a fluorine atom. This allows film A to have excellent water repellency and a high level of hardness, and even makes it easier for film A to have increased anti-snow-accumulation performance. Of course, the first polymer and the binder component may both have a fluorine atom (a fluoroalkyl group). An example of the binder component having a fluoroalkyl group is polymer F or its crosslinked form (a cured product of polymer F and a curing agent). An example of the first polymer having a fluoroalkyl group is a polymer in which the fluoroalkyl group in the compound represented by formula (1) is C₁₋₆ fluoroalkyl (meth) acrylate.

Film A of the present disclosure has, for example, a water contact angle of 150° or greater. This allows the film of the present disclosure to have excellent water repellency.

Film A of the present disclosure has a snow accumulation start time of, for example, preferably 5 minutes or more, more preferably 7 minutes or more, and still more preferably 10 minutes or more in the snow accumulation test on films described later.

Film A of the present disclosure can be formed on various types of substrates. Examples of substrates include known resin substrates, such as acrylic resin and polycarbonate resin, metals, such as aluminum, and inorganic substrates.

Film A of the present disclosure is excellent in anti-snow-accumulation performance and is unlikely to undergo snow accumulation for a long period of time even when exposed to snow. For example, the film formed from the composition of the present disclosure can exhibit anti-snow-accumulation performance for a long period of time even in areas with heavy snowfall.

Thus, film A of the present disclosure is suitable for use in various items that require snow accumulation prevention functionality. For example, a substrate having film A formed on its surface is suitably used in antenna covers.

The anti-snow-accumulation film of the present disclosure in another embodiment is film B. Specifically, film B satisfies the requirement of snow accumulation start time of 5 minutes or more in the snow accumulation test on films described later. The structure of film B is not limited as long as film B satisfies the requirement. For example, film B can be of the same structure as that of film A described above.

Film B has a snow accumulation start time of more preferably 7 minutes or more, and still more preferably 10 minutes or more in the snow accumulation test on films.

The method for forming film B can be any method. For example, film B can be formed by curing the composition of the present disclosure described above.

Film B of the present disclosure can be formed on various types of substrates. Examples of substrates include known resin substrates, such as acrylic resin and polycarbonate resin, metals, and inorganic substrates.

Because of satisfying the requirement, film B of the present disclosure is excellent in anti-snow-accumulation performance and is unlikely to undergo snow accumulation for a long period of time even when exposed to snow. For example, the film formed from the composition of the present disclosure can exhibit anti-snow-accumulation performance for a long period of time even in areas with heavy snowfall. Thus, film B of the present disclosure is suitable for use in various items that require snow accumulation prevention functionality. For example, a substrate having film B formed on its surface can be used in antenna covers.

### Method for Measuring Various Physical Properties of Anti-snow-accumulation Film of Present Disclosure

The following explains the method for measuring various physical properties of the anti-snow-accumulation film (including films A and B) of the present disclosure.

### Water Contact Angle (Static Contact Angle)

The water contact angle refers to the static contact angle of water. The water contact angle is measured with a contact angle meter (Drop Master 701, Kyowa Interface Science Co., Ltd.). Specifically, the water contact angle is measured at 5 points per sample by using water (a droplet of 2 µL). When the static contact angle is 150° or greater, the liquid may be unable to stand on its own on the surface of a substrate. In such a case, the static contact angle is measured with a syringe needle as a support, and the value obtained by doing so is determined to be the static contact angle.

### Snow Accumulation Test on Film

### Snow Accumulation Test

An anti-snow-accumulation film is placed on a test table in a test room kept at a constant temperature within the range of 1 to 2°C such that the surface of the film on which snow hits is perpendicular to the ground, and artificial snow prepared beforehand is sprayed over the film at a wind speed of 10 m/sec and a collision amount of 110 kg/m²/h. This spraying is performed such that the artificial snow collides with the surface of the film. A video image of the entire sprayed surface of the sample is shot from the start of the spraying, and whether snow accumulation has occurred on the surface of the film is visually confirmed from the video image obtained after the test. The time from the start of the spraying to snow accumulation is measured as the snow accumulation start time. "Snow accumulation start time" means the time with no snow accumulation.

### Examples

The present disclosure is described in more detail with reference to Examples. However, the present disclosure is not limited to the embodiments of these Examples.

### Example 1

### Preparation of Rf(C6) Methacrylate-fine Particles Copolymer Solution

3 g of R711 fine silica particles modified with a methacryloyl group with an average particle size of 12 nm (Nippon Aerosil Co., Ltd.), 6 g of C₆F₁₃CH₂CH₂OCOC(CH₃)=CH₂ (which is abbreviated as "Rf(C6) methacrylate" below), and 60 g of perfluorobutyl ethyl ether were placed in a 200-mL four-necked flask, and the flask was purged with N₂ for 10 minutes. Thereafter, 0.3 g of 2,2'-azobisisobutyronitrile was added to the container, and a polymerization reaction was allowed to proceed at 70°C for 6 hours, thereby obtaining a dispersion of composite particles. After polymerization, the solids concentration of the composite particles in the dispersion was calculated.

### Preparation of Coating Solution

Subsequently, the dispersion of composite particles, Zeffle GK-570 (Daikin Industries, Ltd.), which corresponds to polymer F, as a thermosetting resin, Sumidur N3300 (Sumika Covestro Urethane Co., Ltd.) as a curing agent (isocyanate compound), and butyl acetate were mixed, thereby obtaining a film-forming composition as a coating solution. The film-forming composition was formulated to achieve the following: (the mass of the composite particles in the dispersion):(the total mass of Zeffle GK-570 on a solids basis and Sumidur N3300) = 50:50. The percentage of Zeffle GK-570 in the composition was calculated with its mass on a solids basis.

### Preparation of Coating

An aluminum substrate (75 × 75 × 3(t) mm) was immersed in the coating solution and treated with heat at 130°C for 20 minutes. Thereafter, the aluminum substrate was taken out from the coating solution and further sprayed with the coating solution by a spraying technique, followed by heat treatment at 130°C for 60 minutes, thereby forming a target film on the aluminum substrate.

### Example 2

A coating was prepared in the same manner as in Example 1, except that a copolymer of tetrafluoroethylene and a hydroxy-containing vinyl monomer was used instead of Zeffle GK-570, and that a polycarbonate substrate ("PC substrate" below) was used as a substrate.

### Example 3

A dispersion of composite particles was prepared in the same manner as in Example 1, except that the fine silica particles with an average particle size of 12 nm were changed to Sylysia 310P (produced by Fuji Silysia Chemical Ltd.) with an average particle size of 2.7 µm. A film was then prepared in the same manner as in Example 1, except that the aluminum substrate was changed to a polycarbonate (PC) substrate, and that the time period of the heat treatment was changed to 10 minutes.

### Example 4

A film-forming composition containing 27 parts by mass of Sylysia 310P with an average particle size of 2.7 µm (produced by Fuji Silysia Chemical Ltd.) as inorganic fine particles, 3 parts by mass of a fluorine-containing copolymer ("first polymer A" below) according to Preparation Example 2 of Patent No. 5831599 as a first polymer, 57 parts by mass of a copolymer of tetrafluoroethylene and a hydroxy-containing vinyl monomer (on a solids basis) as a coating material component and as a thermosetting resin, and 13 parts by mass of Sumidur N-3300 as a curing agent was prepared in a vial. After the film-forming composition was applied to a polycarbonate substrate by spraying, the polycarbonate substrate was treated at 130°C for 10 minutes, thereby forming a film.

### Example 5

### Preparation of Water-repellent Component B

35 g (0.1 mol) of stearyl acrylate ("StA" below) and 90 g of xylene were placed in a four-necked flask and subjected to nitrogen bubbling for 30 minutes. Thereafter, the mixture was heated to 90°C, and 0.085 g of AIBN (0.5 mol% relative to stearyl acrylate) was added, followed by starting a reaction. After 2 hours from the start of the reaction, 0.085 g of AIBN was further added, and the reaction was allowed to proceed for 4 hours. After 6 hours from the initial addition of AIBN, the reaction solution was added to 300 mL of acetone to perform reprecipitation. The thus-obtained precipitate was dried at 130°C for 2 hours, thereby obtaining a substance in the form of wax ("first polymer B" below).

### Preparation of Coating

A coating was formed in the same manner as in Example 4, except that first polymer A was changed to first polymer B.

### Comparative Example 1

A coating was formed on an aluminum substrate (75 × 75 × 3(t) mm) by using commercially available HIREC 100 (produced by NTT Advanced Technology Corporation).

### Comparative Example 2

The aluminum substrate for use in Example 1 was prepared without performing any treatment.

### Comparative Example 3

A PC substrate was prepared.

### Evaluation of Film

### Water Contact Angle (Static Contact Angle)

The water contact angle was measured with a Drop Master 701 contact angle meter (Kyowa Interface Science Co., Ltd). Specifically, the water contact angle was measured at 5 points per sample by using water (a droplet of 2 µL). When the liquid was unable to stand on its own on the surface of a substrate at a static contact angle of 150° or greater, the static contact angle was measured with a syringe needle as a support, and the value obtained by doing so was determined to be the static contact angle. A sliding angle of 0° means that a droplet of 20 µL was unable to be deposited on the substrate from the needle, or that even if the droplet could be deposited on the substrate, the droplet slid within a range of 0° to 1° at the time or before the measurement was performed; i.e., the instrument used in the test was unable to measure the contact angle.

### Snow Accumulation Test

An evaluation sample (film) was placed on a test table in a test room kept at a constant temperature within the range of 1 to 2°C such that the surface of the film on which snow hits was perpendicular to the ground, and artificial snow prepared beforehand was sprayed over the sample at a wind speed of 10 m/sec and a collision amount of 110 kg/m²/h. This spraying was performed such that the artificial snow collided with the surface of the sample (film). A video image of the entire sprayed surface of the sample was shot from the start of the spraying, and whether snow accumulation occurred on the surface of the film was visually confirmed from the video image obtained after the test. The time from the start of the spraying to snow accumulation was measured as the snow accumulation start time (time with no snow accumulation).

**Table 1**

| Examples and Comparative Examples | Static Contact Angle (°) | Snow Accumulation Start Time (minutes) |
|---|---|---|
| Example 1 | 163.8 | >60 |
| Example 2 | 161.9 | >60 |
| Example 3 | 159.8 | 10 |
| Example 4 | 160.1 | 10 |
| Example 5 | 164.7 | 10 |
| Comparative Example 1 | 159.3 | 2 |
| Comparative Example 2 | 80.0 | 0 |
| Comparative Example 3 | 75.0 | 0 |

Table 1 shows the results of the static contact angle of water (water: 20 µL) and snow accumulation start time. The film formed in Example 1 and the film formed in Comparative Example 1 both exhibited super water repellency.

In Comparative Example 2, snow accumulation was confirmed immediately after the start of the snow accumulation test. In contrast, no snow accumulation was confirmed on the film formed in Example 1 even after 60 minutes passed from the start of the spraying of artificial snow. The results indicated that the film formed in Example 1 had much better anti-snow-accumulation performance than the traditional film (Comparative Example 1) (although the film formed in Example 1 also sometimes had a small amount of snow accumulation in a period of as short as about 30 minutes from the start of the test, the snow immediately slid off).

## Claims

1. A composition for forming an anti-snow-accumulation film, the composition comprising
a composite particle containing
a fine particle, and
a first polymer coating the fine particle, and
a coating material component.

2. The composition for forming an anti-snow-accumulation film according to claim 1, wherein the coating material component contains a compound having a reactive functional group.

3. The composition for forming an anti-snow-accumulation film according to claim 1,
wherein the coating material component contains
a polymer having a reactive functional group, and
a curing agent.

4. The composition for forming an anti-snow-accumulation film according to any one of claims 1 to 3, wherein the first polymer contains a polymer having a structure unit based on a compound represented by the following formula (1): 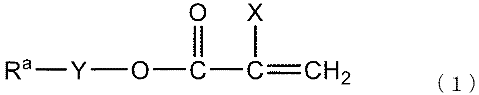 wherein
X represents a hydrogen atom, a fluorine atom, a chlorine atom, a bromine atom, an iodine atom, a CFX¹X² group wherein X¹ and X² are identical or different and represent a hydrogen atom, a fluorine atom, or a chlorine atom, a cyano group, a C₁₋₆ linear or branched fluoroalkyl group, a substituted or unsubstituted benzyl group, a substituted or unsubstituted phenyl group, or a C₁₋₂₀ linear or branched alkyl group,
Y represents a direct bond, a C₁₋₁₀ hydrocarbon group optionally having an oxygen atom, a -CH₂CH₂N(R¹)SO₂- group wherein R¹ represents a C₁₋₄ alkyl group, the right end of the - CH₂CH₂N(R¹)SO₂- group is bound to R^{a}, and the left end of the - CH₂CH₂N(R¹)SO₂- group is bound to O, a -CH₂CH(OY¹)CH₂- group wherein Y¹ represents a hydrogen atom or an acetyl group, the right end of the -CH₂CH(OY¹)CH₂- group is bound to R^{a}, and the left end of the - CH₂CH(OY¹)CH₂- group is bound to O, or a -(CH₂)ₙSO₂- group wherein n is 1 to 10, the right end of the -(CH₂)ₙSO₂- group is bound to R^{a}, and the left end of the -(CH₂)ₙSO₂- group is bound to O, and
R^{a} represents a linear or branched alkyl group having 20 or less carbon atoms, a linear or branched fluoroalkyl group having 6 or less carbon atoms, a polyether group having a molecular weight of 400 to 5000, or a fluoropolyether group having a molecular weight of 400 to 5000.

5. An anti-snow-accumulation film comprising
a composite particle containing
a fine particle, and
a first polymer coating the fine particle, and
a binder component.

6. The anti-snow-accumulation film according to claim 5, wherein the binder component contains a cured product of a compound having a reactive functional group.

7. The anti-snow-accumulation film according to claim 5 or 6, wherein the first polymer contains a polymer having a structure unit based on a compound represented by the following formula (1): 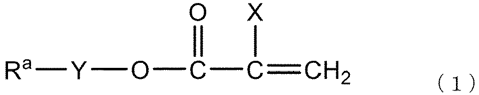 wherein
X represents a hydrogen atom, a fluorine atom, a chlorine atom, a bromine atom, an iodine atom, a CFX¹X² group wherein X¹ and X² are identical or different and represent a hydrogen atom, a fluorine atom, or a chlorine atom, a cyano group, a C₁₋₆ linear or branched fluoroalkyl group, a substituted or unsubstituted benzyl group, a substituted or unsubstituted phenyl group, or a C₁₋₂₀ linear or branched alkyl group,
Y represents a direct bond, a C₁₋₁₀ hydrocarbon group optionally having an oxygen atom, a -CH₂CH₂N(R¹)SO₂- group wherein R¹ represents a C₁₋₄ alkyl group, the right end of the - CH₂CH₂N(R¹)SO₂- group is bound to R^{a}, and the left end of the - CH₂CH₂N(R¹)SO₂- group is bound to O, a -CH₂CH(OY¹)CH₂- group wherein Y¹ represents a hydrogen atom or an acetyl group, the right end of the -CH₂CH(OY¹)CH₂- group is bound to R^{a}, and the left end of the - CH₂CH(OY¹)CH₂- group is bound to O, or a -(CH₂)ₙSO₂- group wherein n is 1 to 10, the right end of the -(CH₂)ₙSO₂- group is bound to R^{a}, and the left end of the -(CH₂)ₙSO₂- group is bound to O, and
R^{a} represents a linear or branched alkyl group having 20 or less carbon atoms, a linear or branched fluoroalkyl group having 6 or less carbon atoms, a polyether group having a molecular weight of 400 to 5000, or a fluoropolyether group having a molecular weight of 400 to 5000.

8. The anti-snow-accumulation film according to any one of claims 5 to 7, wherein the anti-snow-accumulation film has a water contact angle of 150° or higher.

9. An anti-snow-accumulation film,
wherein the anti-snow-accumulation film has a snow accumulation start time of 5 minutes or more as measured in a snow accumulation test; and
wherein the snow accumulation test is performed in the following manner:
an anti-snow-accumulation film is placed on a test table in a test room kept at a constant temperature within the range of 1 to 2°C such that the surface of the film on which snow hits is perpendicular to the ground;
artificial snow prepared beforehand is sprayed over the film at a wind speed of 10 m/sec and a collision amount of 110 kg/m²/h such that the artificial snow collides with the surface of the film;
a video image of the entire sprayed surface of a sample is shot from the start of the spraying, and whether snow accumulation has occurred on the surface of the film is visually confirmed from the video image obtained after the test; and
the time from the start of the spraying to snow accumulation is measured as a snow accumulation start time (time with no snow accumulation).

10. A substrate comprising the anti-snow-accumulation film of any one of claims 5 to 9.

11. The substrate according to claim 10, which is for use in an antenna cover.
